(19) **Europäisches Patentamt / European Patent Office / Office européen des brevets**

(11) **EP 4 697 615 A1**

(12) **EUROPEAN PATENT APPLICATION**
published in accordance with Art. 153(4) EPC

(43) Date of publication:
**18.02.2026  Bulletin 2026/08**

(21) Application number: **24810179.2**

(22) Date of filing: **29.04.2024**

(51) International Patent Classification (IPC):
***H04B 7/0456*** (2017.01)  ***G06N 3/08*** (2023.01)

(52) Cooperative Patent Classification (CPC):
**G06N 3/08; G06N 3/092; G06N 7/01; H04B 7/0456;
H04L 25/03**

(86) International application number:
**PCT/CN2024/090682**

(87) International publication number:
**WO 2024/239932 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.05.2023  CN 202310575465**

(71) Applicant: **Huawei Technologies Co., Ltd.
Shenzhen, Guangdong 518129 (CN)**

(72) Inventors:
• **HUANG, Yingzhi
  Shenzhen, Guangdong 518129 (CN)**
• **CHI, Kaiyi
  Shenzhen, Guangdong 518129 (CN)**

• **YANG, Qianqian
  Shenzhen, Guangdong 518129 (CN)**
• **YANG, Zhaohui
  Shenzhen, Guangdong 518129 (CN)**
• **ZHANG, Zhaoyang
  Shenzhen, Guangdong 518129 (CN)**
• **WU, Jian
  Shenzhen, Guangdong 518129 (CN)**
• **HU, Fenghe
  Shenzhen, Guangdong 518129 (CN)**
• **WU, Kedi
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INTELLIGENT PRECODING METHOD IN REAL-TIME BROADBAND COMMUNICATION
SCENARIO**

(57)    This application discloses an intelligent precoding method and apparatus in a real-time broadband communication scenario. The method includes the following steps of: obtaining a precoding matrix of first to-be-transmitted data of at least one terminal, where the precoding matrix has a correspondence with a priority weight of the at least one terminal, the priority weight corresponds to a first factor, the first factor has a correspondence with first state information, and the first state information corresponds to the first to-be-transmitted data of the at least one terminal; completing precoding of the first to-be-transmitted data of the at least one terminal based on the precoding matrix; and outputting first data, where the first data is data obtained by precoding the first to-be-transmitted data of the at least one terminal. In this application, an adaptively regulated precoding scheme trained by using a deep reinforcement learning network is used to obtain a global optimal solution of precoding in a span of a plurality of slots, to solve a problem that a single-slot optimal solution cannot meet a dynamically changing transmission requirement of a user between slots.

Radio access
network device

700

Terminal

710: Precoding matrix of first to-be-transmitted data of at least one terminal, where the precoding matrix has a correspondence with a priority weight, the priority weight corresponds to a first factor, the first factor has a correspondence with first state information, and the first state information corresponds to the first to-be-transmitted data of the at least one terminal

720: Complete precoding of the first to-be-transmitted data of the at least one terminal based on the precoding matrix

730: First data, where the first data is data obtained by precoding the first to-be-transmitted data of the at least one terminal

740: First ratio, where the first ratio corresponds to the first data, and the first ratio is a ratio of a data amount of correctly received data in the first data to a data amount of the first data

FIG. 7

**Description**

**TECHNICAL FIELD**

This application relates to the field of communication technologies, and in particular, to an intelligent precoding method and apparatus in a real-time broadband communication scenario.

**BACKGROUND**

**In** a wireless communication network, an extended reality (extended reality, XR) technology has advantages such as a plurality of fields of view and strong interactivity, can provide a brand-new visual experience for users, and has great application value and commercial potential.

Real-time broadband communication (real-time broadband communication, RTBC) is one of three new scenarios defined in the 5.5G vision. RTBC mainly is a multimedia transmission technology that requires real-time communication between transmit and receive ends, and is represented by cloud extended reality (Cloud XR), Tactile Internet, and the like. RTBC features a large data amount, high reliability, a low latency, quasi-periodic service packet arrival, and the like. However, a low-latency service requirement reduces an effective channel capacity. In addition, a large data amount causes an extremely limited user capacity of this type of service. A conventional precoding technology with a goal of maximizing a transmission rate in a current slot cannot meet a requirement of maximizing system long-term utility of an RTBC service (joint of a plurality of transmission slots).

For the RTBC service, a precoding scheme for joint of a plurality of transmission slots needs to be designed to increase a data receiving rate of a user, thereby increasing a user capacity of a system. Therefore, how to design an intelligent precoding method in a real-time broadband communication scenario is an urgent problem to be solved.

**SUMMARY**

According to a first aspect, an embodiment of this application provides a communication method. The method may be performed by a radio access network device, may be performed by a component (for example, a processor, a chip, or a chip system) of the radio access network device, or may be implemented by a logical node, a logical module, or software that can implement all or some functions of the radio access network device. The method includes: obtaining a precoding matrix of first to-be-transmitted data of at least one terminal, where the precoding matrix has a correspondence with a priority weight of the at least one terminal, the priority weight corresponds to a first factor, the first factor has a correspondence with first state information, and the first state information corresponds to the first to-be-transmitted data of the at least one terminal; completing precoding of the first to-be-transmitted data of the at least one terminal based on the precoding matrix; and outputting first data, where the first data is data obtained by precoding the first to-be-transmitted data of the at least one terminal.

According to the foregoing method, the base station obtains a precoding matrix used for precoding of at least one terminal. The precoding matrix has a correspondence with a receiving correctness rate of first to-be-transmitted data in a first slot, first state information of the first to-be-transmitted data in the first slot, and second state information of second to-be-transmitted data in a second slot. An adaptively regulated precoding scheme trained by using a reinforcement learning method is used, and a global optimal solution of precoding in a plurality of slot spans is obtained by using an architecture in which a deep reinforcement learning (deep reinforcement learning, DRL) network is concatenated with conventional precoding, to solve a problem that a single-slot optimal solution cannot meet a dynamically changing transmission requirement of a user between slots.

With reference to the first aspect, in some implementations of the first aspect, the first to-be-transmitted data is single-modal to-be-transmitted data.

With reference to the first aspect, in some implementations of the first aspect, the first to-be-transmitted data is multi-modal to-be-transmitted data.

With reference to the first aspect, in some implementations of the first aspect, the first state information includes an active state and an expected average transmission rate that are of the at least one terminal.

With reference to the first aspect, in some implementations of the first aspect, that the first state information corresponds to the first to-be-transmitted data of the at least one terminal includes: determining the active state of the at least one terminal based on arrival time of the first to-be-transmitted data.

With reference to the first aspect, in some implementations of the first aspect, that the first state information corresponds to the first to-be-transmitted data of the at least one terminal includes: determining the expected average transmission rate of a first terminal based on a data amount of to-be-transmitted data of the first terminal and remaining transmission time for transmitting the to-be-transmitted data by the first terminal, where the first terminal is one of the at least one terminal, and the first to-be-transmitted data includes the to-be-transmitted data.

With reference to the first aspect, in some implementations of the first aspect, the expected average transmission rate meets:

$$R_k = \frac{q_k}{\tau_k}$$

where $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

With reference to the first aspect, in some implementations of the first aspect, the expected average transmission rate meets:

$$R_k = \sum_n \frac{q_{k,n}}{\tau_{k,n}}$$

where $R_k$ is the expected average transmission rate of one terminal k in the at least one terminal, $q_{k,n}$ is a total amount of to-be-transmitted data in an $n^{th}$ modal in to-be-transmitted data of the terminal k in the first to-be-transmitted data, $\tau_{k,n}$ is remaining transmission time for transmitting the to-be-transmitted data in the $n^{th}$ modal by the terminal k, and n is a positive integer less than or equal to N.

With reference to the first aspect, in some implementations of the first aspect, that the first factor has a correspondence with the first state information includes: The DRL network determines the first factor based on the first state information.

With reference to the first aspect, in some implementations of the first aspect, that the priority weight corresponds to the first factor includes: determining the priority weight based on the first factor and the expected average transmission rate.

With reference to the first aspect, in some implementations of the first aspect, the priority weight meets:

$$\alpha_k = C^{\left(\frac{R_k}{R_{max}}\right)}$$

where $\alpha_k$ is the priority weight of one terminal k in the at least one terminal, C is a first factor of the terminal k, $R_k$ is the expected average transmission rate of the terminal k, and $R_{max}$ is a maximum value of the expected average transmission rate of the at least one terminal.

With reference to the first aspect, in some implementations of the first aspect, the method further includes: obtaining a first ratio, where the first ratio corresponds to the first data, and the first ratio is a ratio of a data amount of correctly received data in the first data to a data amount of the first data.

With reference to the first aspect, in some implementations of the first aspect, the first ratio and second state information are used to update a DRL network, the second state information corresponds to second to-be-transmitted data of the at least one terminal, and the second to-be-transmitted data is next to-be-transmitted data after the first to-be-transmitted data is transmitted.

With reference to the first aspect, in some implementations of the first aspect, the first to-be-transmitted data is to-be-transmitted data in a first slot, the second to-be-transmitted data is to-be-transmitted data in a second slot, the first slot and the second slot are consecutive in time domain, and the second slot is after the first slot.

According to a second aspect, an embodiment of this application provides a communication method. The method may be performed by a terminal, may be performed by a component (for example, a processor, a chip, or a chip system) of the terminal, or may be implemented by a logical node, a logical module, or software that can implement all or some functions of the terminal. The method includes: receiving second data, where first data includes the second data, the first data is data obtained by precoding first to-be-transmitted data of at least one terminal, the precoding corresponds to a precoding matrix, the precoding matrix has a correspondence with a priority weight of the at least one terminal, the priority weight corresponds to a first factor, the first factor has a correspondence with first state information, and the first state information corresponds to the first to-be-transmitted data of the at least one terminal; determining a second ratio based on the second data, where the second ratio corresponds to the second data, and the second ratio is a ratio of a data amount of correctly received data in the second data to a data amount of the second data; and sending the second ratio.

In this manner, the base station obtains a precoding matrix used for precoding of at least one terminal. The precoding matrix has a correspondence with a receiving correctness rate of first to-be-transmitted data in a first slot, first state information of the first to-be-transmitted data in the first slot, and second state information of second to-be-transmitted data in a second slot. An adaptively regulated precoding scheme trained by using a reinforcement learning method is used, and a global optimal solution of precoding in a plurality of slot spans is obtained by using an architecture in which a DRL network is concatenated with conventional precoding, to solve a problem that a single-slot optimal solution cannot meet a dynamically changing transmission requirement of a user between slots.

With reference to the second aspect, in some implementations of the second aspect, the first to-be-transmitted data is single-modal to-be-transmitted data.

With reference to the second aspect, in some implementations of the second aspect, the first to-be-transmitted data is multi-modal to-be-transmitted data.

With reference to the second aspect, in some implementations of the second aspect, the first state information includes an active state and an expected average transmission rate that are of the at least one terminal.

With reference to the second aspect, in some implementations of the second aspect, that the first state information corresponds to the first to-be-transmitted data of the at least one terminal includes: determining the active state of the at least one terminal based on arrival time of the first to-be-transmitted data.

With reference to the second aspect, in some implementations of the second aspect, that the first state information corresponds to the first to-be-transmitted data of the at least one terminal includes: determining the expected average transmission rate of a first terminal based on a data amount of to-be-transmitted data of the first terminal and remaining transmission time for transmitting the to-be-transmitted data by the first terminal, where the first terminal is one of the at least one terminal, and the first to-be-transmitted data includes the to-be-transmitted data.

With reference to the second aspect, in some implementations of the second aspect, the expected average transmission rate meets:

$$R_k = \frac{q_k}{\tau_k}$$

where $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

With reference to the second aspect, in some implementations of the second aspect, the expected average transmission rate meets:

$$R_k = \sum_n \frac{q_{k,n}}{\tau_{k,n}}$$

where $R_k$ is the expected average transmission rate of one terminal k in the at least one terminal, $q_{k,n}$ is a total amount of to-be-transmitted data in an $n^{th}$ modal in to-be-transmitted data of the terminal k in the first to-be-transmitted data, $\tau_{k,n}$ is remaining transmission time for transmitting the to-be-transmitted data in the $n^{th}$ modal by the terminal k, and n is a positive integer less than or equal to N.

With reference to the second aspect, in some implementations of the second aspect, that the first factor has a correspondence with the first state information includes: The deep reinforcement learning DRL network determines the first factor based on the first state information.

With reference to the second aspect, in some implementations of the second aspect, the second ratio and second state information are used to update a DRL network, the second state information corresponds to second to-be-transmitted data of the at least one terminal, and the second to-be-transmitted data is next to-be-transmitted data after the first to-be-transmitted data is transmitted.

With reference to the second aspect, in some implementations of the second aspect, the first to-be-transmitted data is to-be-transmitted data in a first slot, the second to-be-transmitted data is to-be-transmitted data in a second slot, the first slot and the second slot are consecutive in time domain, and the second slot is after the first slot.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus can be implemented by software and/or hardware. The apparatus may be, for example, a radio access network device, or may be a chip, a chip system, a processor, or the like that supports the radio access network device in implementing the method, or may be a logical node, a logical module, or software that can implement all or some functions of the radio access network device.

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus can be implemented by software and/or hardware. The apparatus may be, for example, a terminal, or may be a chip, a chip system, a processor, or the like that supports the terminal in implementing the method, or may be a logical node, a logical module, or software that can implement all or some functions of the terminal.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of the features corresponding to the first aspect and the second aspect in the third aspect to the thirteenth aspect, refer to related descriptions in the first aspect and the second aspect. Details are not described again.

## BRIEF DESCRIPTION OF DRAWINGS

FIG. 1 is a diagram of a communication system to which embodiments are applied according to this application;
FIG. 2 to FIG. 5 are diagrams of several system frameworks to which embodiments of this application are applicable;
FIG. 6 is a diagram of video frame arrival;
FIG. 7 is a diagram of a communication method according to an embodiment of this application;
FIG. 8 is a diagram of a structure of a terminal according to an embodiment of this application;
FIG. 9 is a diagram of a structure of an apparatus according to an embodiment of this application; and
FIG. 10 is a diagram of another apparatus according to an embodiment of this application.

## DESCRIPTION OF EMBODIMENTS

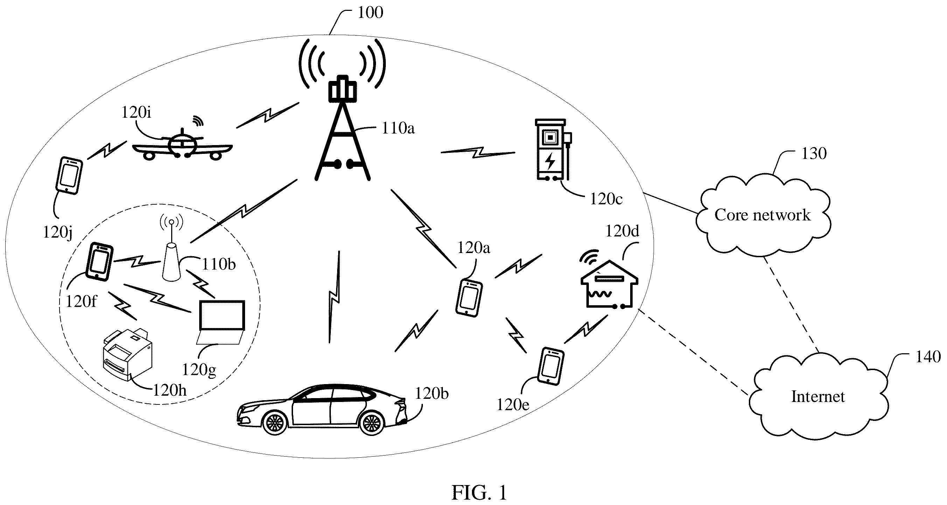

FIG. 1 is a diagram of an architecture of a communication system to which an embodiment of this application is applied. As shown in FIG. 1, the communication system 10 includes a radio access network (radio access network, RAN) 100 and a core network (core network, CN) 130. Optionally, the communication system 10 may further include an internet 140. The RAN 100 may include at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1).

The terminal 120 is connected to the RAN node 110 in a wireless manner. The RAN node 110 is connected to the core network 130 in a wireless or wired manner. A core network device in the core network 130 and the RAN node 110 in the RAN 100 may be different independent physical devices, may be a same physical device that integrates a core network logical function and a radio access network logical function, or may be a device that integrates a part of core network logical functions and a part of radio access network logical functions. The terminals may be connected to each other in a wired or wireless manner and the RAN nodes may be connected to each other in a wired or wireless manner. FIG. 1 is merely a diagram. The communication system may further include other network devices, for example, a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, an open access network (open RAN, O-RAN, or ORAN) system, a cloud radio access network (cloud radio access network, CRAN) system, a wireless-fidelity (wireless-fidelity, Wi-Fi) system, a communication system related to a 3rd generation partnership project (3rd generation partnership project, 3GPP), and another communication system of this type, or may be a communication system integrating the foregoing two or more systems.

The RAN node may also have different expressions, for example, a radio access network device. In this application, unless otherwise specified, the radio access network device is used for expression. The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes a part of functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node or a donor node, or may be a radio controller in a CRAN scenario. Optionally, the radio access network device may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). It may be understood that all or some functions of the radio access network device in this application may also be implemented by using a software function running on hardware, or may be implemented by using an instantiated virtualization function on a platform (for example, a cloud platform). Alternatively, the radio access network device in this application may be a logical node, a logical module, or software that can implement all or some functions of the radio access network device.

In another possible scenario, a plurality of radio access network devices cooperate to assist the terminal in implementing radio access, and different radio access network devices respectively implement a part of functions of the base station. For example, the radio access network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module. A specific technology and a specific device form that are used by the radio access network device are not limited in embodiments of this application. For ease of description, the following provides descriptions by using an example in which the base station is used as the radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, an industrial control, a smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to a terminal, where the sidelink information is carried on a sidelink channel. The information may be control information, or may be data information.

An XR technology has advantages such as a plurality of views and strong interactivity, can provide brand-new experience for a user, and has great application value and great commercial potential. XR includes technologies such as VR, AR, and MR, and can be widely applied to many fields such as entertainment, gaming, medical care, advertising, industry, online education, and engineering. The VR technology is mainly to render visual and audio scenarios, to simulate sensory stimulation of a vision and an audio in a real world to a user as much as possible. The VR technology usually requires the user to wear the XR terminal (for example, the head mounted device) to simulate vision and/or hearing of the user. The VR technology may further perform action tracking on the user, to update simulated visual and/or auditory content in a timely manner. The AR technology is mainly to provide additional visual and/or auditory information or manually generated content in a real environment perceived by the user. The user may directly (where for example, sensing, processing, and rendering is not performed) or indirectly (where for example, transfer is performed through a sensor or the like) perceive the real environment, and further enhancement processing is performed. The MR technology is to insert some virtual elements into a physical scenario, to provide immersive experience for the user by adding these elements as a part of a real scenario.

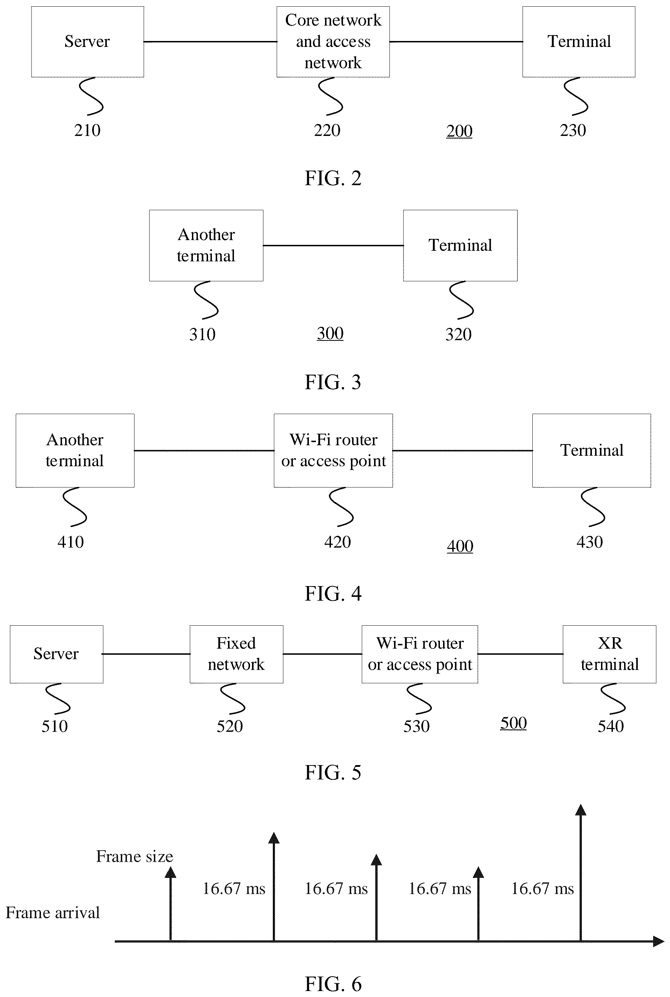

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be referred to as a transport network 220 for short, for example, an LTE network, a 5G network, or a 6G network), and a terminal 230. The server 210 may be configured to: encode, decode, and render XR source data. The transport network 220 may be configured to transmit XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 through the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between vehicle-mounted terminals. It may be understood that the another terminal 310 may be further connected to a transport network (for example, an LTE network, a 5G network, or a 6G network), to obtain XR data from the transport network, or send data to the transport network.

FIG. 4 is a diagram of another scenario to which an embodiment of this application is applicable. FIG. 4 shows a system 400, including a terminal 430, a Wi-Fi router or Wi-Fi access point 420 (which may be referred to as a Wi-Fi apparatus 420 for short), and another terminal 410. The another terminal 410 is a terminal other than the terminal 430. The another terminal 410 may transmit XR data to the terminal 430 through the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device through the Wi-Fi router, the Wi-Fi access point, or the set-top box, and present the XR data to a user.

FIG. 5 is a diagram of another scenario to which an embodiment of this application is applicable. FIG. 5 shows a system 500, including a server 510, a fixed network 520, a Wi-Fi router or Wi-Fi access point 530 (which may be referred to as a Wi-Fi apparatus 530 for short), and a terminal 540. The server 510 may be configured to: encode, decode, and render XR source data, and transmit XR data to the terminal 540 through the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data to the terminal 540 through the operator network 520 and the Wi-Fi apparatus 530.

It may be understood that FIG. 2 to FIG. 5 are merely examples of several scenarios to which embodiments of this application are applicable, and are not intended to limit a scenario to which embodiments of this application are applicable.

The following describes technical solutions of this application with reference to the accompanying drawings.

XR services are widely used in various fields, such as entertainment, healthcare, education, retail, and advertising. Service data of an XR transmission service and a video transmission service is usually periodic arrival based on a frame rate. As shown in FIG. 6, for a video with a frame rate of 60 frames per second (frame per second, FPS), in an ideal case, a picture frame arrives at an interval of 16.67 milliseconds (milliseconds, ms) (which may also be expressed as a frame period of 16.67 ms), and data amounts of arrived picture frames may be different (a higher arrow height in the figure indicates a larger data amount, and a lower arrow height indicates a smaller data amount). A common frame rate of a video frame is 30 FPS, 60 FPS, 90 FPS, or 120 FPS, and a corresponding frame period is 33.33 ms, 16.67 ms, 11.11 ms, or 8.33 ms respectively.

Compared with a common video transmission service, the XR transmission service requires a higher resolution, and therefore has a higher requirement on a transmission rate. For example, a transmission rate of the XR transmission service is 30 megabits per second (megabits per second, Mbps).

For the XR transmission service and the video transmission service, a transmission video frame generally includes a plurality of IP packets after being compressed by using a source compression standard (for example, H.265/HEVC), and the transmission video frame has a cliff effect in a transmission process. The cliff effect means that a bit-level error of the transmission video frame in the transmission process spreads in the entire transmission video frame, or may be understood as that a bit-level error of the transmission video frame in the transmission process causes a sharp decrease in quality of the entire video frame. Therefore, for normal transmission of video frames in the XR transmission service and the video transmission service, all data packets in the video frames need to be correctly transmitted.

Real-time broadband communication (real-time broadband communication, RTBC) is one of three new scenarios defined in the vision of a 5.5G communication system. RTBC mainly is a multimedia transmission technology that requires real-time communication between transmit and receive ends, and is represented by cloud extended reality Cloud XR, Tactile Internet, and the like. This type of service features a large data amount, high reliability, a low latency, quasi-periodic service packet arrival, and the like. A low-latency service requirement reduces an effective channel capacity. In addition, a large data amount causes an extremely limited user capacity of this type of service. For example, a 100 MHz bandwidth supports only about five terminals for a cloud XR service. In addition, due to channel fluctuation over an air interface, user experience of an RTBC service over a 5G air interface is unstable.

One of key technologies for the challenge in the RTBC service is a technology for optimizing air interface precoding. Different from a conventional service that considers maximizing a transmission rate in a current slot, the RTBC service considers maximizing long-term utility of a system. Specifically, the RTBC service considers frame-level transmission, and data is valid only when the data is completely transmitted within specified time. If some data of a frame times out, the entire frame is discarded. This is an integrity constraint of a real-time service. Therefore, for a real-time communication service, a precoding scheme for joint of a plurality of transmission slots needs to be designed to increase a frame receiving rate of a user, and finally increase a user capacity of a system. In addition, the RTBC service further has a multi-modal feature. To be specific, a base station needs to consider transmission of both a video frame and a haptic frame, and experience of a terminal needs to be met in both modals. However, a problem becomes more complex due to features of a haptic packet like burstiness, an extremely low latency, and extremely high reliability. If the precoding process is modeled as an optimization problem, a long-term (that is, in a plurality of slots) optimal precoding scheme needs to be obtained. This problem is an NP-hard hard problem and cannot be directly solved by using an optimization algorithm. Even if the problem is simplified through approximation for solving, algorithm complexity thereof is extremely high, and an obtained solution is not a global optimal solution.

Based on the preceding challenges faced by a conventional algorithm, with the help of a data-driven capability of artificial intelligence, a deep reinforcement learning (deep reinforcement learning, DRL) algorithm can be used to enable an agent to learn environment features from a large amount of experience data obtained through interaction with an environment, and finally obtain a long-term prediction capability of a precoding scheme. A DRL-based algorithm also has advantages of adaptability and scalability. In a dynamic environment, DRL can adjust its behavior adaptively based on features of a current scenario, so that DRL can learn a policy that adapts to the dynamic environment. In addition, DRL has a universal network architecture and good migratable characteristics. In addition, in different scenarios, data features or system model knowledge learned by a DRL agent can be migrated, pruned, or deleted, which greatly improves scalability of a communication system. Therefore, how to design a DRL-based intelligent precoding weight calculation method becomes a key problem for improving system precoding performance and reducing algorithm complexity.

In a multi-user multiple-input multiple-output (multi-user multiple-input multiple-output, MU-MIMO) system, a goal of calculating a precoding weight is to maximize a user capacity, and may also be approximated as maximizing a user signal-to-interference-plus-noise ratio. A precoding weight calculation method for MU-MIMO may include: a zero forcing method, a block diagonalization method, a maximizing signal-to-leakage-and-noise ratio method, a weighted minimum mean square error (weighted minimum mean square error, WMMSE) method, and the like. For example, a process of calculating a precoding weight by using a WMMSE algorithm with a goal of maximizing a sum rate is as follows:

(1) Initialize $V_k$, so that $\sum_{k=1}^{K} Tr(V_k V_k^H) \le P_T$ ;

(2) Repeat the following steps:

(3) Update $U_k$;

$$U_k^{mmse} = (\sum_{m=1}^{K} H_k V_m V_m^H H_k^H + \sigma_k^2 I)^{-1} H_k V_k, \forall k$$

(4) Update $W_k$;

$$W_k^{opt} = E_k^{-1}$$

$$E_k = I - V_k^H H_k^H J_k^{-1} H_k V_k$$

(5) Update $V_k$;

$$V_k^{opt} = (\sum_{m=1}^{K} \alpha_m H_m^H U_m W_m U_m^H H_m + \mu_k I)^{-1} \alpha_k H_k^H U_k W_k$$

If an increment of an objective function $\sum_{k=1}^{K} \alpha_k \log \det(E_k^{-1})$ compared with a previous iteration is less than a specified threshold, the loop ends; otherwise, (2) is re-performed.

$V_k$ represents a transmit weight, K represents a quantity of users, $P_T$ represents total power, $U_k$ represents a

receive weight, $W_k$ represents a receive weighting matrix, $E_k$ represents a mean square error (mean square error, MSE), and $\alpha_k$ represents a weighting coefficient of a sum rate of each user.

Deep-unfolding (deep-unfolding) is a precoding weight calculation method based on a deep learning network. In the deep-unfolding method, an iterative algorithm induced deep-unfolding neural network (iterative algorithm induced deep-unfolding neural network, IAIDNN) is used to approximate an inverse calculation process in the WMMSE algorithm, thereby reducing complexity of calculating a precoding weight by using the WMMSE algorithm.

The RTBC service has a latency requirement for air interface transmission. For example, an XR video frame in the RTBC service needs to be completely transmitted over an air interface within 10 ms. A multi-user precoding technology with a goal of maximizing a sum rate in a single slot cannot meet the latency requirement of the RTBC service. Consequently, data transmitted over an air interface does not meet an integrity constraint and becomes invalid transmission data, thereby wasting air interface resources. Therefore, how to design a precoding scheme for joint of a plurality of slot spans is an urgent problem to be solved.

This application provides an intelligent precoding weight calculation method in a real-time broadband communication scenario. An adaptively regulated precoding scheme trained by using a reinforcement learning method is used, and a global optimal solution of precoding in a plurality of slot spans is obtained by using an architecture in which a deep reinforcement learning (deep reinforcement learning, DRL) network is concatenated with conventional precoding, to solve a problem that a single-slot optimal solution cannot meet a dynamically changing transmission requirement of a user between slots.

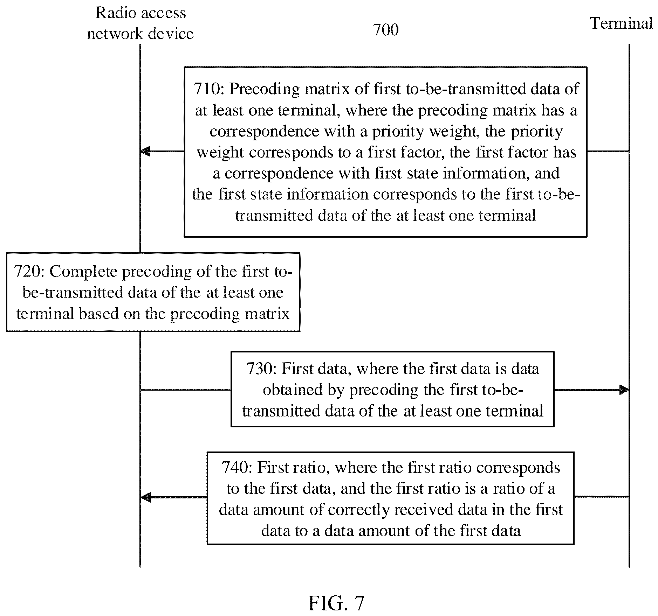

FIG. 7 is an interaction diagram of a communication method 700 according to an embodiment of this application. In FIG. 7, the method is illustrated by using an example in which a radio access network device and a terminal perform interaction. However, an execution body of the interaction is not limited in this application. For example, the radio access network device in FIG. 7 may alternatively be a module (for example, a chip, a chip system, or a processor) applied to the radio access network device, or may be a logical node, a logical module, or software that can implement all or some functions of the radio access network device. The terminal in FIG. 7 may alternatively be a module (for example, a chip, a chip system, or a processor) applied to the terminal to implement the method, or may be a logical node, a logical module, or software that can implement all or some functions of the terminal. As shown in FIG. 7, the method 700 in this embodiment may include a part 710, a part 720, a part 730, and a part 740.

Part 710: A base station obtains a precoding matrix of first to-be-transmitted data of at least one terminal, where the precoding matrix has a correspondence with a priority weight of the at least one terminal, the priority weight corresponds to a first factor, the first factor has a correspondence with first state information, and the first state information corresponds to the first to-be-transmitted data of the at least one terminal. The first to-be-transmitted data may be data whose granularity is a frame, a transport block (transport block, TB), or a bit. This is not limited in this application.

Part 720: The base station completes precoding of the first to-be-transmitted data of the at least one terminal based on the precoding matrix.

Part 730: The base station outputs first data, where the first data is data obtained by precoding the first to-be-transmitted data of the at least one terminal. Correspondingly, the terminal receives second data, where the first data includes the second data.

Part 740: The base station obtains a first ratio, where the first ratio corresponds to the first data, and the first ratio is a ratio of a data amount of correctly received data in the first data to a data amount of the first data. The first ratio and second state information are used to update a DRL network, the second state information corresponds to second to-be-transmitted data of the at least one terminal, and the second to-be-transmitted data is next to-be-transmitted data after the first to-be-transmitted data is transmitted. For example, the first to-be-transmitted data is to-be-transmitted data in a first slot, the second to-be-transmitted data is to-be-transmitted data in a second slot, the first slot and the second slot are consecutive in time domain, and the second slot is after the first slot. Correspondingly, the at least one terminal sends the first ratio to the base station. The second to-be-transmitted data may be data whose granularity is a frame, a transport block (transport block, TB), or a bit. This is not limited in this application.

In the method 700, the base station obtains a precoding matrix used for precoding of at least one terminal. The precoding matrix has a correspondence with a receiving correctness rate of first to-be-transmitted data in a first slot, first state information of the first to-be-transmitted data in the first slot, and second state information of second to-be-transmitted data in a second slot. An adaptively regulated precoding scheme trained by using a reinforcement learning method is used, and a global optimal solution of precoding in a plurality of slot spans is obtained by using an architecture in which a DRL network is concatenated with conventional precoding, to solve a problem that a single-slot optimal solution cannot meet a dynamically changing transmission requirement of a user between slots.

In this application, "sending information to ... (the radio access network device)" may be understood as that a destination end of the information is the radio access network device; and may include directly or indirectly sending the information to the radio access network device. "Receiving ... information from (the radio access network device)" may be understood as that a source end of the information is the radio access network device; and may include directly or indirectly receiving the information from the radio access network device. Information may undergo necessary processing, for example, a format change, between the source end for sending the information and the destination end. However, the destination end may understand valid information from the source end. A similar expression in this application may be understood similarly, and details are not described herein again.

In a possible implementation of the first to-be-transmitted data, the first to-be-transmitted data is single-modal to-be-transmitted data. For example, the first to-be-transmitted data is to-be-transmitted data including a plurality of transmission video frames, or the first to-be-transmitted data is to-be-transmitted data including a plurality of transmission haptic frames.

In another possible implementation of the first to-be-transmitted data, the first to-be-transmitted data is multi-modal to-be-transmitted data. For example, the first to-be-transmitted data is to-be-transmitted data including a plurality of transmission video frames and transmission haptic frames. In this case, a modal quantity of the first to-be-transmitted data is 2.

In a possible implementation of the first state information, the first state information includes an active state of the at least one terminal, and that the first state information corresponds to the first to-be-transmitted data of the at least one terminal includes: The base station determines the active state of the at least one terminal based on arrival time of the first to-be-transmitted data. For example, the first to-be-transmitted data is a to-be-transmitted video frame, a quantity of terminals included in the at least one terminal is K, and a maximum possible value of K is $K_{max}$. The user is activated based on arrival time of the to-be-transmitted video frame. Arrival time of a first packet of a to-be-transmitted video frame of each user complies with truncated Gaussian distribution. In a $t^{th}$ slot, a user k is in an active state if the user k has a video frame arriving, and the user k is in an inactive state if the user k has no video frame arriving. For another example, the first to-be-transmitted data is a to-be-transmitted video frame and a to-be-transmitted haptic frame, a quantity of terminals included in the at least one terminal is K, and a maximum possible value of K is $K_{max}$. The user is first activated based on arrival time of the to-be-transmitted video frame and each channel of to-be-transmitted haptic frame. Arrival time of a first packet of a to-be-transmitted video frame of each user complies with truncated Gaussian distribution, and to-be-transmitted haptic frames arrive evenly within initial $T_{initial}$ ms. Each real-time communication user sets N channels of possible haptic signals (that is, the user has N contact points), arrival of each channel of haptic signal complies with independent generalized Pareto distribution X = $\mu$ +

$$\frac{\sigma(U^{-\xi}-1)}{\xi} \sim GPD(\mu, \sigma, \xi)$$, and X is obtained as interval time of arrival of this channel of haptic frame. In a $t^{th}$ slot, a user k is in an active state if the user k has a video frame or a haptic frame arriving, and the user k is in an inactive state if the user k has no video frame and haptic frame arriving. After the active state of the at least one terminal is determined, an action network $\pi(\theta)$ and a value network $Q(\phi_1)$, $Q(\phi_2)$ of the DRL network are initialized. The value network $Q(\phi_1)$, $Q(\phi_2)$ is a fully connected structure formed by four layers of neurons. The first three layers of the action network $\pi(\theta)$ are also fully connected structures. A mean value and a variance of Gaussian distribution used for action sampling are obtained by using a neural network of the first three layers. An action finally output by a network is randomly sampled from distribution.

In a possible implementation of the first state information, the first state information includes an expected average transmission rate, and that the first state information corresponds to the first to-be-transmitted data of the at least one terminal includes: The base station determines the expected average transmission rate of a first terminal based on a data amount of to-be-transmitted data of the first terminal and remaining transmission time for transmitting the to-be-transmitted data by the first terminal, where the first terminal is one of the at least one terminal, and the first to-be-transmitted data includes the to-be-transmitted data.

In a possible implementation of the expected average transmission rate, the expected average transmission rate meets:

$$R_k = \frac{q_k}{\tau_k}$$

where $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

For example, in a $t^{th}$ slot, a data amount of a remaining to-be-transmitted video frame of a user k is $q_{k,t}$, a remaining transmission latency of the video frame is $\tau_{k,t}$, and an expected average transmission rate of the user k in the slot is obtained as $R_{k,t} = \frac{q_{k,t}}{\tau_{k,t}}$. Then, a state vector of all users is $s_t = R_t$, where Rt is an expected average transmission rate vector of all the users. An input dimension of an action network on a central end is $K_{max}$, the network has good scalability, and algorithm performance of the network is robust under different interaction user quantities. When $K < K_{max}$, only zeros need to be added to the end of the state vector $s_t$ so that the dimension of the state vector is $K_{max}$.

In another possible implementation of the expected average transmission rate, the expected average transmission rate meets:

$$R_k = \sum_n \frac{q_{k,n}}{\tau_{k,n}}$$

where $R_k$ is the expected average transmission rate of one terminal k in the at least one terminal, $q_{k,n}$ is a total amount of to-be-transmitted data in an nth modal in to-be-transmitted data of the terminal k in the first to-be-transmitted data, $\tau_{k,n}$ is remaining transmission time for transmitting the to-be-transmitted data in the nth modal by the terminal k, and n is a positive integer less than or equal to N.

For example, in a tth slot, a data amount of a remaining to-be-transmitted video frame of a user k is $q_{k,t}$, a remaining transmission latency of the video frame is $\tau_{k,t}$, a case for the haptic frame is deduced by analogy, and details are not described herein. An expected average transmission rate of the user k in the slot is obtained as $R_{k,t} = \sum_n \frac{q_{k,t,n}}{\tau_{k,t,n}}$,

and n is a modal index. Then, a state vector of all users is $\mathbf{s}_t = \mathbf{R}_t$, where Rt is an expected average transmission rate vector of all the users. An input dimension of an action network on a central end is $K_{max}$, the network has scalability, and algorithm performance of the network is robust under different interaction user quantities. When $K < K_{max}$, zeros are added to the end of the state vector $\mathbf{s}_t$ so that the dimension of the state vector is $K_{max}$.

In a possible implementation of the first factor, the first factor has a correspondence with the first state information, and the DRL network determines the first factor based on the first state information. For example, the state vector $\mathbf{s}_t$ is input into the action network $\pi(\theta)$ of the DRL network, and an action $a_t$ of the tth slot is output and obtained, that is, a factor C for controlling a user priority weight range.

In a possible implementation of the priority weight, that the priority weight corresponds to the first factor includes: The base station determines the priority weight based on the first factor and the expected average transmission rate. The priority weight meets:

$$\alpha_k = C^{\left(\frac{R_k}{R_{max}}\right)}$$

where $\alpha_k$ is the priority weight of one terminal k in the at least one terminal, C is a first factor of the terminal k, $R_k$ is the expected average transmission rate of the terminal k, and $R_{max}$ is a maximum value of the expected average transmission rate of the at least one terminal.

For example, the first factor is C, and a priority weight of the user k in the tth slot meets:

$$\alpha_{k,t} = C^{\left(\frac{R_{k,t}}{R_{t,max}}\right)}$$

where $\alpha_{k,t}$ is the priority weight of one terminal k in the at least one terminal in the tth slot, C is a first factor of the terminal k, $R_{k,t}$ is the expected average transmission rate of the terminal k in the tth slot, and $R_{t,max}$ is a maximum value of the expected average transmission rate of the at least one terminal in the tth slot.

Under a condition of a power constraint of a weight sum, a multi-user precoding matrix $\mathbf{V} \in \mathbb{C}^{K \times N_t \times d}$ is obtained by using a WMMSE algorithm, where $N_t$ is a quantity of transmit antennas, a quantity of receive antennas is $N_r$, and d is a quantity of signal streams. A main process of the WMMSE algorithm is as follows:

Initialize $V_k$, and ensure $\sum_{k=1}^{K} Tr(V_k V_k^H) \leq P_T$, where $P_T$ is transmit power of a central end. Then, repeat the following steps:

Update $U_k$, where $U_k = (\sum_{m \neq k}^{K} H_k V_m V_m^H H_k^H + \sigma_k^2 I)^{-1} H_k V_k$, $\forall k$;

update $W_k$, where $W_k^{opt} = E_k^{-1}$ and $E_k = I - V_k^H H_k^H (\sum_{m \neq k}^{K} H_k V_k V_k^H H_k^H + \sigma_k^2 I)^{-1} H_k V_k$;

update $V_k$, where $V_k^{opt} = (\sum_{m \neq k}^{K} \alpha_m H_m^H U_m W_m U_m^H H_m + \mu_k I)^{-1} \alpha_k H_k^H U_k W_k$; and

if an increment of an objective function $\sum_{k=1}^{K} \alpha_k \log \det(E_k^{-1})$ compared with a previous iteration is less than a given threshold, the loop ends; otherwise, the update continues.

$U_k$ and $W_k$ are introduced intermediate variables. $V_k$ represents a transmit weight, K represents a quantity of users, $P_T$ represents total power, $U_k$ represents a receive weight, $W_k$ represents a receive weighting matrix, $E_k$ represents a mean square error (mean square error, MSE), and $\alpha_k$ represents a priority weight of each user.

The precoding matrix is used to complete precoding of the first to-be-transmitted data of the at least one terminal. After precoding is completed, the base station outputs first data, where the first data is data obtained by precoding the first to-be-transmitted data of the at least one terminal. Correspondingly, the terminal receives second data, where the first data includes the second data. Real-time communication between the base station and the at least one terminal is implemented.

In a possible implementation of the method 700, the method further includes: The base station obtains a first ratio, where the first ratio corresponds to the first data, and the first ratio is a ratio of a data amount of correctly received data in the first data to a data amount of the first data. Correspondingly, the terminal sends the first ratio.

In a possible implementation of the first ratio, one ratio of the first ratio meets: $\xi_{k,t}=U_{k,t}/M_{k,t}$, where $\xi_{k,t}$ is the ratio of one terminal k in the at least one terminal in the $t^{th}$ slot, $M_{k,t}$ is a total amount of transmission data received by the terminal k before the $t^{th}$ slot, and $U_{k,t}$ is a transmission utility function of the second data of the terminal k in the $t^{th}$ slot.

For example, the second data is data including a plurality of to-be-transmitted video frames, and the ratio $\xi_{k,t}^{\mathrm{video}}$ of the terminal k in the $t^{th}$ slot meets: $\xi_{k,t}^{\mathrm{video}}=U_{k,t}^{\mathrm{video}}/M_{k,t}^{\mathrm{video}}$, where $M_{k,t}^{\mathrm{video}}$ is a total data amount of transmission video frames received by the terminal k before the $t^{th}$ slot, and $U_{k,t}^{\mathrm{video}}$ is a transmission utility function of the plurality of to-be-transmitted video frames of the terminal k in the $t^{th}$ slot.

In a possible implementation of the transmission utility function, based on a transmission integrity requirement, where the integrity requirement may also be understood as that the first to-be-transmitted data is completely transmitted within a specified latency, the transmission utility function of the second data of the terminal k in the at least one terminal in the $t^{th}$ slot is defined as:

$$U_{k,t} = \begin{cases} 1, \sum_{i=t_0}^{t} c_{k,i} \cdot W \cdot T_1 \geq Q_{k,t} \\ 0,\ others \end{cases}$$

T1 is a specified slot length, a start moment of the slot length is a $t_0{}^{th}$ slot, an end slot is the $t^{th}$ slot, W is a system bandwidth, $Q_{k,t}$ is a total data amount value of the second data, and $c_{k,i}$ is a data transmission rate at which the terminal k receives the second data in an $i^{th}$ slot.

For example, the second data is data including a plurality of to-be-transmitted video frames, and the transmission utility function of the second data of the terminal k in the $t^{th}$ slot is:

$$U_{k,t}^{video} = \begin{cases} 1, \sum_{i=t_0}^{t} c_{k,i} \cdot W \cdot T_1 \geq Q_{k,t}^{video} \\ 0,\ others \end{cases}$$

T1 is a specified slot length, a start moment of the slot length is a $t_0{}^{th}$ slot, an end slot is the $t^{th}$ slot, W is a system bandwidth, $Q_{k,t}^{\mathrm{video}}$ is a total data amount value of the plurality of to-be-transmitted video frames, and $c_{k,i}$ is a data transmission rate at which the terminal k receives the plurality of to-be-transmitted video frames in an $i^{th}$ slot.

In another possible implementation of the first ratio, one ratio in a group of ratios of the first ratio meets: $\xi_{k,t,n}=U_{k,t,n}/M_{k,t,n}$, where $\xi_{k,t,n}$ is the ratio of an $n^{th}$ piece of modal data in the second data received by one terminal k in the at least one terminal in the $t^{th}$ slot, $M_{k,t,n}$ is a total data amount of the $n^{th}$ piece of modal data in transmission data received by the terminal k before the $t^{th}$ slot, $U_{k,t,n}$ is a transmission utility function of the $n^{th}$ piece of modal data in the second data of the terminal k in the $t^{th}$ slot, n is an integer greater than 1 and less than or equal to N, and N is a modal quantity of the second data.

For example, the second data is data including a plurality of to-be-transmitted video frames and a plurality of to-be-transmitted haptic frames, the modal quantity of the second data is N=2, and the ratio $\xi_{k,t}^{\mathrm{video}}$ (that is, $\xi_{k,t,1}$) of the plurality of to-be-transmitted video frames received by the terminal k in the $t^{th}$ slot meets: $\xi_{k,t}^{\text{video}}=U_{k,t}^{\text{video}}/M_{k,t}^{\text{video}}$,

where $M_{k,t}^{\text{video}}$ is a total data amount of transmission video frames received by the terminal k before the $t^{th}$ slot, $U_{k,t}^{\text{video}}$ is a transmission utility function of the plurality of to-be-transmitted video frames of the terminal k in the $t^{th}$ slot, and the ratio $\xi_{k,t}^{\text{haptic}}$ (that is, $\xi_{k,t,2}$) of the plurality of to-be-transmitted haptic frames received by the terminal k in the $t^{th}$ slot meets:

$\xi_{k,t}^{\text{haptic}}=U_{k,t}^{\text{haptic}}/M_{k,t}^{\text{haptic}}$, where $M_{k,t}^{\text{haptic}}$ is a total data amount of transmission haptic frames received by the terminal k before the $t^{th}$ slot, and $U_{k,t}^{\text{haptic}}$ is a transmission utility function of the plurality of to-be-transmitted haptic frames of the terminal k in the $t^{th}$ slot.

In another possible implementation of the transmission utility function, based on a transmission integrity requirement, where the integrity requirement may also be understood as that the first to-be-transmitted data is completely transmitted within a specified latency, a transmission utility function of an $n^{th}$ piece of modal data in the second data of the terminal k in the at least one terminal in the $t^{th}$ slot is defined as:

$$U_{k,t,n} = \begin{cases} 1, \sum_{i=t_0}^{t} c_{k,i,n} \cdot W \cdot T_1 \geq Q_{k,t,n} \\ 0, \, others \end{cases}$$

T1 is a specified slot length, a start moment of the slot length is a $t_0^{th}$ slot, an end slot is the $t^{th}$ slot, W is a system bandwidth, $Q_{k,t,n}$ is a total data amount value of the $n^{th}$ piece of modal data in the second data, and $c_{k,i,n}$ is a data transmission rate at which the terminal k receives the $n^{th}$ piece of modal data in the second data in an $i^{th}$ slot.

For example, the second data is data including a plurality of to-be-transmitted video frames and a plurality of to-be-transmitted haptic frames, the modal quantity of the second data is N=2, and a transmission utility function $U_{k,t}^{video}$ (that is, $U_{k,t,1}$) of the plurality of to-be-transmitted video frames of the terminal k in the $t^{th}$ slot is:

$$U_{k,t}^{video} = \begin{cases} 1, \sum_{i=t_0}^{t} c_{k,i,1} \cdot W \cdot T_1 \geq Q_{k,t}^{video} \\ 0, \, others \end{cases}$$

T1 is a specified slot length, a start moment of the slot length is a $t_0^{th}$ slot, an end slot is the $t^{th}$ slot, W is a system bandwidth, $Q_{k,t}^{\text{video}}$ is a total data amount value of the plurality of to-be-transmitted video frames, and $c_{k,i,1}$ is a data transmission rate at which the terminal k receives the plurality of to-be-transmitted video frames in an $i^{th}$ slot.

A transmission utility function $U_{k,t}^{haptic}$ (that is, $U_{k,t,2}$) of the plurality of to-be-transmitted haptic frames of the terminal k in the $t^{th}$ slot is:

$$U_{k,t}^{haptic} = \begin{cases} 1, \sum_{i=t_0}^{t} c_{k,i,2} \cdot W \cdot T_1 \geq Q_{k,t}^{haptic} \\ 0, \, others \end{cases}$$

T1 is a specified slot length, a start moment of the slot length is a $t_0^{th}$ slot, an end slot is the $t^{th}$ slot, W is a system bandwidth, $Q_{k,t}^{\text{haptic}}$ is a total data amount value of the plurality of to-be-transmitted haptic frames, and $c_{k,i,2}$ is a data transmission rate at which the terminal k receives the plurality of to-be-transmitted haptic frames in an $i^{th}$ slot.

In a possible implementation of the data transmission rate at which one terminal k in the at least one terminal receives the second data in the $t^{th}$ slot, the data transmission rate meets:

$$c_k = W\log_2\det\left(\mathbf{I} + \mathbf{H}_k\mathbf{V}_k\mathbf{V}_k^H\mathbf{H}_k^H\left(\sum_{m\neq k}\mathbf{H}_k\,\mathbf{V}_m\mathbf{V}_m^H\mathbf{H}_k^H + \frac{\sigma_k^2}{P_T}\sum_k\mathrm{Tr}\,(\mathbf{V}_k\mathbf{V}_k^H)\mathbf{I}\right)^{-1}\right)$$

W is a system bandwidth, I is a unit matrix, $H_k$ is a channel matrix of one terminal k in the at least one terminal, $V_k$ is a precoding matrix of the terminal k, $V_m$ is a precoding matrix of one terminal in other terminals excepting the terminal k in the at least one terminal, m≠k, $P_T$ is transmit power of the base station, $\sigma_k^2$ is a noise variance of the terminal k, det(.) represents a determinant, (.)$^H$ represents conjugate transpose, Tr(.) represents a sum of diagonal elements, and (.)$^{-1}$ represents inversion.

For example, the second data is data including a plurality of to-be-transmitted video frames, and the data transmission rate at which one terminal k in the at least one terminal receives the second data in the t$^{th}$ slot meets:

$$c_{k,t} = W\log_2\det\left(I + H_{k,t}V_{k,t}V_{k,t}^H H_{k,t}^H\left(\sum_{m\neq k}H_{k,t}\,V_{m,t}V_{m,t}^H H_{k,t}^H + \frac{\sigma_{k,t}^2}{P_T}\sum_k Tr\,\left(V_{k,t}V_{k,t}^H\right)I\right)^{-1}\right)$$

W is a system bandwidth, I is a unit matrix, $H_{k,t}$ is a channel matrix of the terminal k in the t$^{th}$ slot, $V_{k,t}$ is a precoding matrix of the terminal k in the t$^{th}$ slot, $V_{m,t}$ is a precoding matrix of one terminal in other terminals excepting the terminal k in the at least one terminal in the t$^{th}$ slot, m≠k, $P_T$ is transmit power of the base station, $\sigma_{k,t}^2$ is a noise variance of the terminal k in the t$^{th}$ slot, det(.) represents a determinant, (.)$^H$ represents conjugate transpose, Tr(.) represents a sum of diagonal elements, and (.)$^{-1}$ represents inversion.

For another example, the second data is data including a plurality of to-be-transmitted video frames and a plurality of to-be-transmitted haptic frames, and the data transmission rate at which one terminal k in the at least one terminal receives the second data in the t$^{th}$ slot meets:

$$c_{k,t} = W\log_2\det\left(I + H_{k,t}V_{k,t}V_{k,t}^H H_{k,t}^H\left(\sum_{m\neq k}H_{k,t}\,V_{m,t}V_{m,t}^H H_{k,t}^H + \frac{\sigma_{k,t}^2}{P_T}\sum_k Tr\,\left(V_{k,t}V_{k,t}^H\right)I\right)^{-1}\right)$$

W is a system bandwidth, I is a unit matrix, $H_{k,t}$ is a channel matrix of the terminal k in the t$^{th}$ slot, $V_{k,t}$ is a precoding matrix of the terminal k in the t$^{th}$ slot, $V_{m,t}$ is a precoding matrix of one terminal in other terminals excepting the terminal k in the at least one terminal in the t$^{th}$ slot, m≠k, $P_T$ is transmit power of the base station, $\sigma_{k,t}^2$ is a noise variance of the terminal k in the t$^{th}$ slot, det(.) represents a determinant, (.)$^H$ represents conjugate transpose, Tr(.) represents a sum of diagonal elements, and (.)$^{-1}$ represents inversion. Because the haptic frame has a relatively high priority, the haptic frame is first transmitted in each slot at the data transmission rate $c_{k,t}$, and a total data amount of the plurality of to-be-transmitted haptic frames in the t$^{th}$ slot is $Q_{k,t}^{haptic}$. If the terminal k has $N_{k,t}^{haptic}$ channels of haptic signals in the t$^{th}$ slot, the total data amount at the moment is $Q_{k,t}^{\mathrm{haptic}} = (p^{\mathrm{haptic}}N_{k,t}^{\mathrm{haptic}} + p^{\mathrm{head}})$ bytes, where $p^{\mathrm{haptic}}$ is a data amount of each channel of haptic signal, and $p^{\mathrm{head}}$ is a data amount of a packet header. A remaining rate is then reserved for transmission of the plurality of to-be-transmitted video frames, and the remaining rate is $c_{k,t}^{\mathrm{video}} = \max((c_{k,t} - \frac{Q_{k,t}^{\mathrm{haptic}}}{W\cdot T_1}),0)$ (that is, the foregoing $c_{k,t,2}$).

The first ratio and second state information are used to update the DRL network, the second state information corresponds to second to-be-transmitted data of the at least one terminal, and the second to-be-transmitted data is next to-be-transmitted data after the first to-be-transmitted data is transmitted. The first to-be-transmitted data is to-be-transmitted data in a first slot, the second to-be-transmitted data is to-be-transmitted data in a second slot, the first slot and the second slot are consecutive in time domain, and the second slot is after the first slot.

In a possible implementation of updating the DRL network, the base station re-obtains a state of a to-be-transmitted data frame of the user, calculates a reward value by using a first ratio fed back by the user, and updates the action network and the value network of the DRL network based on collected experience (a current state, an action, a next-moment state, and a reward).

For example, the second data is data including a plurality of to-be-transmitted video frames, and the following system long-term utility maximization problem may be modeled based on the first ratio:

$$\max \sum_k \eta_k^{\text{video}} \xi_{k,t}^{\text{video}}$$

$$\text{s.t.} \ W \cdot \log_2 det \left( \mathbf{I} + \frac{\left| \mathbf{H}_{k,t} \mathbf{V}_{k,t} \right|^2}{\sum_{k' \neq k}^K \left| \mathbf{H}_{k,t} \mathbf{V}_{k',t} \right|^2 + \sigma_n^2 \mathbf{I}} \right) \geq \varepsilon_{k,t}^{\min}, \forall k = 1, \dots, K$$

$$U_{k,t}^{\text{video}} = \begin{cases} 1, \sum_{i=t_0}^t c_{k,t} \cdot W \cdot T_1 \geq Q_k^{\text{video}} \\ 0, \text{others} \end{cases}$$

$$\xi_{k,t}^{\text{video}} = U_{k,t}^{\text{video}} / M_{k,t}^{\text{video}}$$

$$\left\| \mathbf{V}_{k,t} \right\|^2 = \mathrm{P}_T, \forall k = 1, \dots, K$$

where $\eta_k^{\text{video}}$ is a service priority. A multi-user precoding process in a single-modal interaction scenario is modeled as a Markov decision process, and the foregoing problem is solved by using a reinforcement learning algorithm. A reward value in a current transmission state is calculated based on the first ratio fed back by the user:

$$r_t = \sum_k \eta_k^{\text{video}} \xi_{k,t}^{\text{video}} / K - \sum_k \eta_k^{\text{video}} \xi_{k,t-1}^{\text{video}} / K$$

$R_{k,t+1} = \frac{q_{k,t+1,0}}{\tau_{k,t+1,0}}$ , $\mathbf{s}_{t+1} = \mathbf{R}_{t+1}$ is updated, experience $\langle \mathbf{s}_t, a_t, \mathbf{s}_{t+1}, r_t \rangle$ in the $t^{\text{th}}$ slot is collected and stored in an experience playback pool, and the action network $\pi(\theta)$ and the value network $Q(\phi_1)$, $Q(\phi_2)$ are updated when the experience stored in the playback pool is greater than a size B of batch training. For the value network $Q(\phi_1)$, $Q(\phi_2)$, a state and an action are input, and value prediction of each action is output. During value prediction, a lower output value of the two networks is selected to handle an over-estimation problem of a Q value. The experience stored in the playback pool complies with a first in first out principle. A playback pool size is set before training.

For another example, the second data is data including a plurality of to-be-transmitted video frames and a plurality of to-be-transmitted haptic frames, and the following system long-term utility maximization problem may be modeled based on the first ratio:

$$\max \sum_k \eta_k^{\text{video}} \xi_{k,t}^{\text{video}} + \eta_k^{\text{haptic}} \xi_{k,t}^{\text{haptic}}$$

$$\text{s.t.} \ W \cdot \log_2 det \left( \mathbf{I} + \frac{\left| \mathbf{H}_{k,t} \mathbf{V}_{k,t} \right|^2}{\sum_{k' \neq k}^K \left| \mathbf{H}_{k,t} \mathbf{V}_{k',t} \right|^2 + \sigma_n^2 \mathbf{I}} \right) - Q_k^{\text{haptic}} / (W \cdot T_0) \geq \varepsilon_{k,t}^{\min}, \forall k = 1, \dots, K$$

$$U_{k,t}^{\text{video}} = \begin{cases} 1, \sum_{i=t_0}^{t} c_{k,i}^{\text{video}} \cdot W \cdot T_1 \geq Q_k^{\text{video}} \\ 0, \text{others} \end{cases}, U_{k,t}^{\text{haptic}} = \begin{cases} 1, \sum_{i=t_0}^{t} c_{k,t} \cdot W \cdot T_1 \geq Q_k^{\text{haptic}} \\ 0, \text{others} \end{cases}$$

$$\xi_{k,t}^{\text{video}} = U_{k,t}^{\text{video}} / M_{k,t}^{\text{video}}, \xi_{k,t}^{\text{haptic}} = U_{k,t}^{\text{haptic}} / M_{k,t}^{\text{haptic}}$$

$$\left\| \mathbf{V}_{k,t} \right\|^2 = \mathrm{P}_T, \forall k = 1, \dots, K$$

where $\eta_k^{video}$ and $\eta_k^{haptic}$ are service priorities. A multi-user precoding process in a multi-modal interaction scenario is modeled as a Markov decision process, and the foregoing problem is solved by using a reinforcement learning algorithm. A reward value in a current transmission state is calculated based on the first ratio fed back by the user:

$$r_t = \left( \sum_k \eta_k^{\text{video}} \xi_{k,t}^{\text{video}} + \eta_k^{\text{haptic}} \xi_{k,t}^{\text{haptic}} \right)/K - \left( \sum_k \eta_k^{\text{video}} \xi_{k,t-1}^{\text{video}} + \eta_k^{\text{haptic}} \xi_{k,t-1}^{\text{haptic}} \right)/K$$

$R_{k,t+1} = \frac{q_{k,t+1,0}}{\tau_{k,t+1,0}}$, $s_{t+1} = \mathbf{R}_{t+1}$ is updated, experience $\langle s_t, a_t, s_{t+1}, r_t \rangle$ in the $t^{\text{th}}$ slot is collected and stored in an experience playback pool, and the action network $\pi(\theta)$ and the value network $Q(\phi_1)$, $Q(\phi_2)$ are updated when the experience stored in the playback pool is greater than a size B of batch training. For the value network $Q(\phi_1)$, $Q(\phi_2)$, a state and an action are input, and value prediction of each action is output. During value prediction, a lower output value of the two networks is selected to handle an over-estimation problem of a Q value. The experience stored in the playback pool complies with a first in first out principle. A playback pool size is set before training.

In this embodiment, network update of an intelligent precoding algorithm follows a procedure of a Soft Actor-Critic (SAC) algorithm, and an entropy maximization mechanism is introduced into an objective function, so that an agent explores a state space more fully, preventing the agent from falling into local optimization too early.

The DRL network is updated, where a convergence condition of the DRL network is that a change of the reward value is less than a specific threshold.

After training of the DRL network is completed, the base station may directly use the trained DRL network to predict the priority weight of the at least one terminal based on the first state information of the first to-be-transmitted data of the at least one terminal, output the precoding matrix with reference to a prediction result, and complete precoding of the first to-be-transmitted data.

According to the intelligent precoding method in a real-time broadband communication scenario provided in this application, a global optimal solution in a plurality of slots is obtained by using a reinforcement learning adaptively regulated precoding scheme, thereby solving a problem that a single-slot optimal solution cannot meet a dynamically changing transmission requirement of a user. In addition, a problem that a network architecture of an existing intelligent wireless communication algorithm has a relatively large scale, relatively poor generalization, and is difficult to be applied to an actual communication scenario is further solved. In this solution, a small-scale network architecture is used to efficiently predict a system global precoding scheme accurately. In this way, a receive frame rate and a quantity of met users are increased in the real-time communication scenario.

Corresponding to the method provided in the foregoing method embodiments, embodiments of this application further provide a corresponding apparatus, including corresponding modules configured to execute the foregoing embodiments. The module may be software, hardware, or a combination of software and hardware.

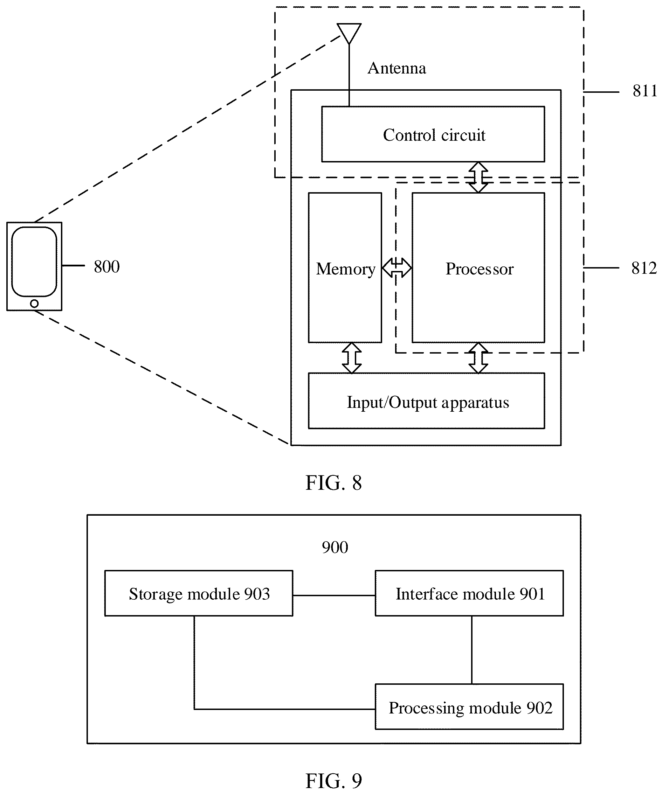

FIG. 8 is a diagram of a structure of a terminal. The terminal is applicable to the scenario shown in FIG. 1, FIG. 2, FIG. 3, FIG. 4, or FIG. 5. The terminal or a component in the terminal may perform the foregoing method 700 and various possible implementations. For ease of description, FIG. 8 shows only main components of the terminal. As shown in FIG. 8, the terminal 800 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 8 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have the receiving function and the sending function may be considered as a transceiver unit 811 of the terminal 800, and the processor having a processing function may be considered as a processing unit 812 of the terminal 800. As shown in FIG. 8, the terminal 800 includes the transceiver unit 811 and the processing unit 812. The transceiver unit may also be referred to as a transceiver, a transceiver machine, a transceiver apparatus, or the like. Optionally, a component configured to implement the receiving function in the transceiver unit 811 may be considered as a receiving unit, and a component configured to implement the sending function in the transceiver unit 811 may be considered as a sending unit. In other words, the transceiver unit 811 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions. As shown in FIG. 9, another embodiment of this application provides an apparatus 900. The apparatus may be a terminal, or may be a component (for example, an integrated circuit or a chip) of the terminal. Alternatively, the apparatus may be a radio access network device, a component (for example, an integrated circuit or a chip) of the radio access network device, or a logical node, a logical module, or software that can implement all or some functions of the radio access network device. The apparatus may alternatively be another communication module. For example, the apparatus 900 may implement functions of the radio access network device in the method 700 and various possible implementations, or the apparatus 900 may implement functions of the terminal in the method 700 and various possible implementations. The apparatus 900 may include: an interface module 901 (or referred to as an interface unit) and a processing module 902 (or referred to as a processing unit), and may further include a storage module 903 (or referred to as a storage unit).

In a possible design, one or more modules in FIG. 9 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the apparatus 900 includes an interface module 901 and a processing module 902. For example, the apparatus 900 may be a radio access network device, may be a component (for example, a processor, a chip, or a chip system) of the radio access network device, or may be a logical node, a logical module, or software that can implement all or some functions of the radio access network device. The interface module 901 is configured to obtain a precoding matrix of first to-be-transmitted data of at least one terminal, where the precoding matrix has a correspondence with a priority weight of the at least one terminal, the priority weight corresponds to a first factor, the first factor has a correspondence with first state information, and the first state information corresponds to the first to-be-transmitted data of the at least one terminal. The processing module 902 is configured to complete precoding of the first to-be-transmitted data of the at least one terminal based on the precoding matrix. The interface module 901 is further configured to output first data, where the first data is data obtained by precoding the first to-be-transmitted data of the at least one terminal.

In a possible implementation of the apparatus 900, the first to-be-transmitted data is single-modal to-be-transmitted data.

In a possible implementation of the apparatus 900, the first to-be-transmitted data is multi-modal to-be-transmitted data.

In a possible implementation of the apparatus 900, the first state information includes an active state and an expected average transmission rate that are of the at least one terminal.

In a possible implementation of the apparatus 900, that the first state information corresponds to the first to-be-transmitted data of the at least one terminal includes: determining the active state of the at least one terminal based on arrival time of the first to-be-transmitted data.

In a possible implementation of the apparatus 900, that the first state information corresponds to the first to-be-transmitted data of the at least one terminal includes: determining the expected average transmission rate of a first terminal based on a data amount of to-be-transmitted data of the first terminal and remaining transmission time for transmitting the to-be-transmitted data by the first terminal, where the first terminal is one of the at least one terminal, and the first to-be-transmitted data includes the to-be-transmitted data.

In a possible implementation of the apparatus 900, the expected average transmission rate meets:

$$R_k = \frac{q_k}{\tau_k}$$

where $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

In a possible implementation of the apparatus 900, the expected average transmission rate meets:

$$R_k = \sum_n \frac{q_{k,n}}{\tau_{k,n}}$$

where $R_k$ is the expected average transmission rate of one terminal k in the at least one terminal, $q_{k,n}$ is a total amount of to-be-transmitted data in an $n^{th}$ modal in to-be-transmitted data of the terminal k in the first to-be-transmitted data, $\tau_{k,n}$ is remaining transmission time for transmitting the to-be-transmitted data in the $n^{th}$ modal by the terminal k, and n is a positive integer less than or equal to N.

In a possible implementation of the apparatus 900, that the first factor has a correspondence with the first state information includes: The deep reinforcement learning DRL network determines the first factor based on the first state information.

In a possible implementation of the apparatus 900, that the priority weight corresponds to the first factor includes: determining the priority weight based on the first factor and the expected average transmission rate.

In a possible implementation of the apparatus 900, the priority weight meets:

$$\alpha_k = C^{\left(\frac{R_k}{R_{max}}\right)}$$

where $\alpha_k$ is the priority weight of one terminal k in the at least one terminal, C is a first factor of the terminal k, $R_k$ is the expected average transmission rate of the terminal k, and $R_{max}$ is a maximum value of the expected average transmission rate of the at least one terminal.

In a possible implementation of the apparatus 900, the interface module 901 is further configured to obtain a first ratio, where the first ratio corresponds to the first data, and the first ratio is a ratio of a data amount of correctly received data in the first data to a data amount of the first data.

In a possible implementation of the apparatus 900, the first ratio and second state information are used to update a DRL network, the second state information corresponds to second to-be-transmitted data of the at least one terminal, and the second to-be-transmitted data is next to-be-transmitted data after the first to-be-transmitted data is transmitted.

In a possible implementation of the apparatus 900, the first to-be-transmitted data is to-be-transmitted data in a first slot, the second to-be-transmitted data is to-be-transmitted data in a second slot, the first slot and the second slot are consecutive in time domain, and the second slot is after the first slot.

In a possible design, the apparatus 900 includes an interface module 901 and a processing module 902. For example, the apparatus 900 may be a terminal, or may be a component (for example, a processor, a chip, or a chip system) of the terminal, or may be a logical node, a logical module, or software that can implement all or some functions of the terminal. The interface module 901 is configured to receive second data, where first data includes the second data, the first data is data obtained by precoding first to-be-transmitted data of at least one terminal, the precoding corresponds to a precoding matrix, the precoding matrix has a correspondence with a priority weight of the at least one terminal, the priority weight corresponds to a first factor, the first factor has a correspondence with first state information, and the first state information corresponds to the first to-be-transmitted data of the at least one terminal. The processing module 902 is configured to determine a second ratio based on the second data, where the second ratio corresponds to the second data, and the second ratio is a ratio of a data amount of correctly received data in the second data to a data amount of the second data. The interface module 901 is further configured to send the second ratio.

In a possible implementation of the apparatus 900, the first to-be-transmitted data is single-modal to-be-transmitted data.

In a possible implementation of the apparatus 900, the first to-be-transmitted data is multi-modal to-be-transmitted data.

In a possible implementation of the apparatus 900, the first state information includes an active state and an expected average transmission rate that are of the at least one terminal.

In a possible implementation of the apparatus 900, that the first state information corresponds to the first to-be-transmitted data of the at least one terminal includes: determining the active state of the at least one terminal based on arrival time of the first to-be-transmitted data.

In a possible implementation of the apparatus 900, that the first state information corresponds to the first to-be-transmitted data of the at least one terminal includes: determining the expected average transmission rate of a first terminal based on a data amount of to-be-transmitted data of the first terminal and remaining transmission time for transmitting the to-be-transmitted data by the first terminal, where the first terminal is one of the at least one terminal, and the first to-be-transmitted data includes the to-be-transmitted data.

In a possible implementation of the apparatus 900, the expected average transmission rate meets:

$$R_k = \frac{q_k}{\tau_k}$$

where $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

In a possible implementation of the apparatus 900, the expected average transmission rate meets:

$$R_k = \sum_n \frac{q_{k,n}}{\tau_{k,n}}$$

where $R_k$ is the expected average transmission rate of one terminal k in the at least one terminal, $q_{k,n}$ is a total amount of to-be-transmitted data in an $n$th modal in to-be-transmitted data of the terminal k in the first to-be-transmitted data, $\tau_{k,n}$ is remaining transmission time for transmitting the to-be-transmitted data in the $n$th modal by the terminal k, and n is a positive integer less than or equal to N.

In a possible implementation of the apparatus 900, that the first factor has a correspondence with the first state information includes: The deep reinforcement learning DRL network determines the first factor based on the first state information.

In a possible implementation of the apparatus 900, the second ratio and second state information are used to update a DRL network, the second state information corresponds to second to-be-transmitted data of the at least one terminal, and the second to-be-transmitted data is next to-be-transmitted data after the first to-be-transmitted data is transmitted.

In a possible implementation of the apparatus 900, the first to-be-transmitted data is to-be-transmitted data in a first slot, the second to-be-transmitted data is to-be-transmitted data in a second slot, the first slot and the second slot are consecutive in time domain, and the second slot is after the first slot.

It may be understood that, for beneficial effects corresponding to the apparatus 900 and various possible implementations, refer to the descriptions in the foregoing method embodiment or SUMMARY. Details are not described herein again.

Optionally, the apparatus 900 may further include a storage module 903, configured to store data or instructions (which may also be referred to as code or a program). The other modules may interact with or be coupled to the storage module, to implement corresponding methods or functions. For example, the processing module 902 may read the data or the instructions in the storage module 903, so that the apparatus 900 implements the method in the foregoing embodiments.

In an example, the module in the foregoing apparatus may be one or more integrated circuits configured to implement the foregoing methods, for example, one or more application specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

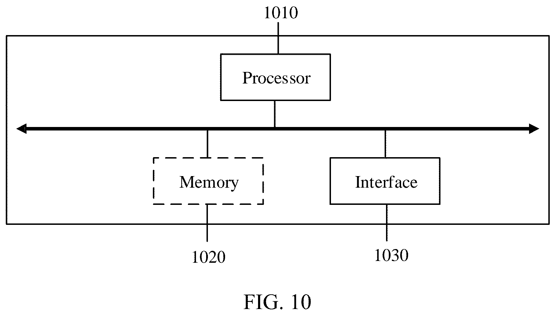

FIG. 10 is a diagram of an apparatus according to an embodiment of this application. The apparatus may be configured to implement the foregoing method 700 and various possible implementations. As shown in FIG. 10, the apparatus includes: a processor 1010 and an interface 1030. The processor 1010 is coupled to the interface 1030. The interface 1030 is configured to communicate with another module or device. The interface 1030 may be a transceiver or an input/output interface. The interface 1030 may be, for example, an interface circuit. Optionally, the apparatus further includes a memory 1020, configured to store instructions executed by the processor 1010, store input data required by the processor 1010 to run the instructions, or store data generated after the processor 1010 runs the instructions.

The method 700 and various possible implementations may be implemented by the processor 1010 by invoking the program or the instructions stored in the memory 1020. The memory 1020 may be inside the apparatus, or may be outside the apparatus. This is not limited in this application.

Optionally, a function/implementation process of the interface module 901 and the processing module 902 in FIG. 9 may be implemented by the processor 1010 in the apparatus shown in FIG. 10. Alternatively, a function/implementation process of the processing module 902 in FIG. 9 may be implemented by the processor 1010 in the apparatus shown in FIG. 10, and a function/implementation process of the interface module 901 in FIG. 9 may be implemented by the interface 1030 in the apparatus shown in FIG. 10. For example, the function/implementation process of the interface module 901 may be implemented by the processor by invoking program instructions in the memory to drive the interface 1030.

When the apparatus is a chip used in a terminal, the chip in the terminal implements functions of the terminal in the foregoing method embodiments. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The steps of the methods described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may connect to a processor so that the processor may read information from the storage medium and write information to the storage medium. Optionally, the storage medium may be integrated into a processor. The processor and the storage media may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented. For same or similar parts in embodiments of this application, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A communication method, comprising:

   obtaining a precoding matrix of first to-be-transmitted data of at least one terminal, wherein the precoding matrix has a correspondence with a priority weight of the at least one terminal, the priority weight corresponds to a first factor, the first factor has a correspondence with first state information, and the first state information corresponds to the first to-be-transmitted data of the at least one terminal;
   completing precoding of the first to-be-transmitted data of the at least one terminal based on the precoding matrix; and
   outputting first data, wherein the first data is data obtained by precoding the first to-be-transmitted data of the at least one terminal.

2. The method according to claim 1, wherein the first to-be-transmitted data is single-modal to-be-transmitted data.

3. The method according to claim 1, wherein the first to-be-transmitted data is multi-modal to-be-transmitted data.

4. The method according to any one of claims 1 to 3, wherein the first state information comprises an active state and an expected average transmission rate that are of the at least one terminal.

5. The method according to any one of claims 1 to 4, wherein that the first state information corresponds to the first to-be-transmitted data of the at least one terminal comprises:
determining the active state of the at least one terminal based on arrival time of the first to-be-transmitted data.

6. The method according to claim 1, 2, 4, or 5, wherein that the first state information corresponds to the first to-be-transmitted data of the at least one terminal comprises:
determining the expected average transmission rate of a first terminal based on a data amount of to-be-transmitted data of the first terminal and remaining transmission time for transmitting the to-be-transmitted data by the first terminal, wherein the first terminal is one of the at least one terminal, and the first to-be-transmitted data comprises the to-be-transmitted data.

7. The method according to claim 2 or claims 4 to 6, wherein the expected average transmission rate meets:

$$R_k = \frac{q_k}{\tau_k}$$

wherein $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

8. The method according to claim 3 or claims 4 to 6, wherein the expected average transmission rate meets:

$$R_k = \sum_n \frac{q_{k,n}}{\tau_{k,n}}$$

wherein $R_k$ is the expected average transmission rate of one terminal k in the at least one terminal, $q_{k,n}$ is a total amount of to-be-transmitted data in an $n^{th}$ modal in to-be-transmitted data of the terminal k in the first to-be-transmitted data, $\tau_{k,n}$ is remaining transmission time for transmitting the to-be-transmitted data in the $n^{th}$ modal by the terminal k, and n is a positive integer less than or equal to N.

9. The method according to any one of claims 1 to 8, wherein that the first factor has a correspondence with the first state information comprises:
determining, by a deep reinforcement learning DRL network, the first factor based on the first state information.

10. The method according to any one of claims 2 to 9, wherein that the priority weight corresponds to the first factor comprises:
determining the priority weight based on the first factor and the expected average transmission rate.

11. The method according to any one of claims 2 to 10, wherein the priority weight meets:

$$\alpha_k = C^{\left(\frac{R_k}{R_{max}}\right)}$$

wherein $\alpha_k$ is the priority weight of one terminal k in the at least one terminal, C is a first factor of the terminal k, $R_k$ is the expected average transmission rate of the terminal k, and $R_{max}$ is a maximum value of the expected average transmission rate of the at least one terminal.

12. The method according to claim 1, wherein the method further comprises:
obtaining a first ratio, wherein the first ratio corresponds to the first data, and the first ratio is a ratio of a data amount of correctly received data in the first data to a data amount of the first data.

13. The method according to claim 9 or 12, wherein the first ratio and second state information are used to update the DRL network, the second state information corresponds to second to-be-transmitted data of the at least one terminal, and the second to-be-transmitted data is next to-be-transmitted data after the first to-be-transmitted data is transmitted.

14. The method according to claim 13, wherein the first to-be-transmitted data is to-be-transmitted data in a first slot, the second to-be-transmitted data is to-be-transmitted data in a second slot, the first slot and the second slot are consecutive in time domain, and the second slot is after the first slot.

15. A communication method, comprising:

receiving second data, wherein first data comprises the second data, the first data is data obtained by precoding first to-be-transmitted data of at least one terminal, the precoding corresponds to a precoding matrix, the precoding matrix has a correspondence with a priority weight of the at least one terminal, the priority weight corresponds to a first factor, the first factor has a correspondence with first state information, and the first state information corresponds to the first to-be-transmitted data of the at least one terminal;
determining a second ratio based on the second data, wherein the second ratio corresponds to the second data, and the second ratio is a ratio of a data amount of correctly received data in the second data to a data amount of the second data; and
sending the second ratio.

16. The method according to claim 15, wherein the first to-be-transmitted data is single-modal to-be-transmitted data.

17. The method according to claim 15, wherein the first to-be-transmitted data is multi-modal to-be-transmitted data.

18. The method according to any one of claims 15 to 17, wherein the first state information comprises an active state and an expected average transmission rate that are of the at least one terminal.

19. The method according to any one of claims 15 to 18, wherein that the first state information corresponds to the first to-be-transmitted data of the at least one terminal comprises:
determining the active state of the at least one terminal based on arrival time of the first to-be-transmitted data.

20. The method according to claim 15, 16, 18, or 19, wherein that the first state information corresponds to the first to-be-transmitted data of the at least one terminal comprises:
determining the expected average transmission rate of a first terminal based on a data amount of to-be-transmitted data of the first terminal and remaining transmission time for transmitting the to-be-transmitted data by the first terminal, wherein the first terminal is one of the at least one terminal, and the first to-be-transmitted data comprises the to-be-transmitted data.

21. The method according to claim 16 or claims 18 to 20, wherein the expected average transmission rate meets:

$$R_k = \frac{q_k}{\tau_k}$$

wherein $R_k$ is the expected average transmission rate of one terminal k in the at least one terminal, $q_k$ is a total amount of to-be-transmitted data of the terminal k in the first to-be-transmitted data, and $\tau_k$ is remaining transmission time for transmitting the to-be-transmitted data of the terminal k by the terminal k.

22. The method according to claim 17 or claims 18 to 20, wherein the expected average transmission rate meets:

$$R_k = \sum_n \frac{q_{k,n}}{\tau_{k,n}}$$

wherein $R_k$ is the expected average transmission rate of one terminal k in the at least one terminal, $q_{k,n}$ is a total amount of to-be-transmitted data in an $n^{th}$ modal in to-be-transmitted data of the terminal k in the first to-be-transmitted data, $\tau_{k,n}$ is remaining transmission time for transmitting the to-be-transmitted data in the $n^{th}$ modal by the terminal k, and n is a positive integer less than or equal to N.

23. The method according to any one of claims 15 to 22, wherein that the first factor has a correspondence with the first state information comprises:
determining, by a deep reinforcement learning DRL network, the first factor based on the first state information.

24. The method according to claim 15 or 23, wherein the second ratio and second state information are used to update the DRL network, the second state information corresponds to second to-be-transmitted data of the at least one terminal, and the second to-be-transmitted data is next to-be-transmitted data after the first to-be-transmitted data is transmitted.

25. The method according to claim 24, wherein the first to-be-transmitted data is to-be-transmitted data in a first slot, the second to-be-transmitted data is to-be-transmitted data in a second slot, the first slot and the second slot are consecutive in time domain, and the second slot is after the first slot.

26. A communication apparatus, comprising a processor, wherein the processor is coupled to a memory, the memory is configured to store a program or instructions, and when the program or the instructions are executed by the processor, the apparatus is enabled to perform the method according to any one of claims 1 to 14.

27. A communication apparatus, comprising a processor, wherein the processor is coupled to a memory, the memory is configured to store a program or instructions, and when the program or the instructions are executed by the processor, the apparatus is enabled to perform the method according to any one of claims 15 to 25.

28. A computer-readable storage medium, wherein the computer-readable storage medium stores instructions, and when the instructions are executed, a computer is enabled to perform the method according to any one of claims 1 to 14, or perform the method according to any one of claims 15 to 25.

29. A computer program product, comprising computer program code, wherein when the computer program code is run, the method according to any one of claims 1 to 14 is implemented, or the method according to any one of claims 15 to 25 is performed.

FIG. 1

| Server | | Core network and access network | | Terminal |

210          220       200      230

FIG. 2

| Another terminal | | Terminal |

310          300         320

FIG. 3

| Another terminal | | Wi-Fi router or access point | | Terminal |

410        420      400     430

FIG. 4

| Server | | Fixed network | | Wi-Fi router or access point | | XR terminal |

510      520      530    500    540

FIG. 5

Frame size

Frame arrival     16.67 ms    16.67 ms    16.67 ms    16.67 ms

FIG. 6

Radio access
network device                          700                     Terminal

710: Precoding matrix of first to-be-transmitted data of
at least one terminal, where the precoding matrix has a
correspondence with a priority weight, the priority
weight corresponds to a first factor, the first factor has
a correspondence with first state information, and
the first state information corresponds to the first to-be-
transmitted data of the at least one terminal

720: Complete precoding of the first to-
be-transmitted data of the at least one
terminal based on the precoding matrix

730: First data, where the first data is data
obtained by precoding the first to-be-
transmitted data of the at least one terminal

740: First ratio, where the first ratio corresponds
to the first data, and the first ratio is a ratio of a
data amount of correctly received data in the first
data to a data amount of the first data

FIG. 7

Antenna

811

Control circuit

Memory Processor 812

Input/Output apparatus

800

FIG. 8

900

Storage module 903    Interface module 901

Processing module 902

FIG. 9

1010

Processor

Memory

Interface

1020 1030

FIG. 10

## INTERNATIONAL SEARCH REPORT

| International application No. |
| --- |
| **PCT/CN2024/090682** |

| A. | CLASSIFICATION OF SUBJECT MATTER |
| --- | --- |

H04B7/0456(2017.01)i; G06N3/08(2023.01)i

According to International Patent Classification (IPC) or to both national classification and IPC

| B. | FIELDS SEARCHED |
| --- | --- |

Minimum documentation searched (classification system followed by classification symbols)

IPC: H04B; H04W; H04L

Documentation searched other than minimum documentation to the extent that such documents are included in the fields searched

Electronic data base consulted during the international search (name of data base and, where practicable, search terms used)

CNTXT: CNKI; ENTXTC; DWPI; 3GPP; IEEE: 智能, 预编码, 矩阵, 深度强化学习, 机器学习, 模态, 优先级, 因子, 权重, 权值, 激活, 状态, intelligent, precoding matrix, deep reinforcement learning, modulo, momentum, priority, factor, weight, active, state, DRL, PMI, ML, AI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112803975 A (HUAWEI TECHNOLOGIES CO., LTD.) 14 May 2021 (2021-05-14) description, paragraphs 100-245 | 1-29 |
| A | CN 114205005 A (CHINA MOBILE COMMUNICATION CO., LTD., RESEARCH INSTITUTE et al.) 18 March 2022 (2022-03-18) entire document | 1-29 |
| A | WO 2023059881 A1 (INTERDIGITAL PATENT HOLDINGS, INC.) 13 April 2023 (2023-04-13) entire document | 1-29 |
| A | WO 2022184161 A1 (QUALCOMM INC. et al.) 09 September 2022 (2022-09-09) entire document | 1-29 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 July 2024** | **18 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090682**

| Patent document cited in search report | | | Publication date (day/month/year) | Patent family member(s) | | | Publication date (day/month/year) |
|---|---|---|---|---|---|---|---|
| CN | 112803975 | A | 14 May 2021 | WO | 2021093591 | A1 | 20 May 2021 |
| | | | | CN | 112803975 | B | 25 February 2022 |
| | | | | US | 2022271806 | A1 | 25 August 2022 |
| | | | | EP | 4064584 | A1 | 28 September 2022 |
| | | | | EP | 4064584 | A4 | 15 March 2023 |
| | | | | US | 11996917 | B2 | 28 May 2024 |
| CN | 114205005 | A | 18 March 2022 | None | | | |
| WO | 2023059881 | A1 | 13 April 2023 | None | | | |
| WO | 2022184161 | A1 | 09 September 2022 | US | 2024048209 | A1 | 08 February 2024 |
| | | | | WO | 2022183469 | A1 | 09 September 2022 |

Form PCT/ISA/210 (patent family annex) (July 2022)